(19) Europäisches Patentamt
European Patent Office
Office européen des brevets

(11) **EP 4 131 729 A1**

(12) **EUROPEAN PATENT APPLICATION**
published in accordance with Art. 153(4) EPC

(43) Date of publication:
**08.02.2023 Bulletin 2023/06**

(21) Application number: **20927565.0**

(22) Date of filing: **27.03.2020**

(51) International Patent Classification (IPC):
**H02K 1/27** (1990.01)

(52) Cooperative Patent Classification (CPC):
**H02K 1/27**

(86) International application number:
**PCT/JP2020/014046**

(87) International publication number:
**WO 2021/192231 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mitsubishi Electric Corporation**
**Chiyoda-ku**
**Tokyo 100-8310 (JP)**

(72) Inventors:
• **HIROSAWA, Yuji**
**Tokyo 100-8310 (JP)**
• **NIGO, Masahiro**
**Tokyo 100-8310 (JP)**

(74) Representative: **Pfenning, Meinig & Partner mbB**
**Patent- und Rechtsanwälte**
**Joachimsthaler Straße 10-12**
**10719 Berlin (DE)**

(54) **ROTOR, ELECTRIC MOTOR, COMPRESSOR, REFRIGERATION CYCLE DEVICE, AND AIR CONDITIONING DEVICE**

(57)     A rotor (1) includes a rotary shaft extending in an axial direction, a first rotor core (10), a permanent magnet (2), and a second rotor core (20). The first rotor core (10) includes a first core part (10a) and a second core part (10b) arranged in the axial direction and is supported by the rotary shaft. The permanent magnet (2) is attached to the first rotor core (10). The second rotor core (20) is arranged between the first core part (10a) and the second core part (10b) . The area of a part where the second rotor core (20) exists is larger than the area of a part where the first rotor core (10) exists when viewed in the axial direction.

FIG. 2

**Description**

**TECHNICAL FIELD**

The present disclosure relates to a rotor, a motor, a compressor, a refrigeration cycle apparatus and an air conditioner.

**BACKGROUND ART**

There has been widespread a motor including a stator and a rotor having a rotor core and a permanent magnet attached to the rotor core (see Patent Reference 1, for example). In the Patent Reference 1, the permanent magnet contains dysprosium in order to prevent the permanent magnet from being demagnetized by a demagnetizing field due to a rotating magnetic field of the stator.

**PRIOR ART REFERENCE**

**PATENT REFERENCE**

Patent Reference 1: Japanese Patent No. 5931213

**SUMMARY OF THE INVENTION**

**PROBLEM TO BE SOLVED BY THE INVENTION**

However, dysprosium is a rare-earth resource and thus is expensive. Therefore, to reduce the cost, the content of dysprosium has to be reduced and there are cases where the demagnetization of the permanent magnet cannot be inhibited sufficiently. A technology for inhibiting the demagnetization of the permanent magnet while reducing the content of dysprosium is being requested.

An object of the present disclosure is to inhibit the demagnetization of the permanent magnet while reducing the cost.

**MEANS FOR SOLVING THE PROBLEM**

A rotor according to an aspect of the present disclosure includes a rotary shaft extending in an axial direction, a first rotor core that includes a first core part and the second core part arranged in the axial direction and is supported by the rotary shaft, a permanent magnet attached to the first rotor core, and a second rotor core arranged between the first core part and the second core part, wherein an area of a part where the second rotor core exists is larger than an area of a part where the first rotor core exists when viewed in the axial direction.

**EFFECT OF THE INVENTION**

According to the present disclosure, the demagnetization of the permanent magnet can be inhibited while reducing the cost.

**BRIEF DESCRIPTION OF THE DRAWINGS**

Fig. 1 is a cross-sectional view showing the configuration of a motor according to a first embodiment.
Fig. 2 is a cross-sectional view showing the configuration of a rotor of the motor according to the first embodiment.
Fig. 3 is a plan view showing the configuration of a first core part of a first rotor core shown in Fig. 2.
Fig. 4 is a plan view showing the configuration of a second rotor core shown in Fig. 2.
Fig. 5A is an enlarged plan view showing the configuration around a magnet insertion hole of the first rotor core shown in Fig. 3, and Fig. 5B is an enlarged plan view showing the configuration around a through hole of the second rotor core shown in Fig. 4.
Fig. 6 is a graph showing a relationship between a ratio ($L_2/t_0$) of an axial direction length of the second rotor core to a thickness of a permanent magnet of the rotor according to the first embodiment and effective magnetic flux of the permanent magnet per unit volume.

Fig. 7 is a cross-sectional view showing the configuration of a rotor of a motor according to a comparative example.

Fig. 8 is a graph showing a relationship between intensity of a demagnetizing field occurring in the permanent magnet and a weight ratio of dysprosium in the permanent magnet.

Fig. 9 is an enlarged plan view showing the configuration around through holes of a second rotor core of a rotor according to a first modification of the first embodiment.

Fig. 10 is an enlarged plan view showing the configuration around the through hole of a second rotor core of a rotor according to a second modification of the first embodiment.

Fig. 11 is an enlarged plan view showing the configuration around the through hole of a second rotor core of a rotor according to a third modification of the first embodiment.

Fig. 12A is an enlarged plan view showing the configuration around the magnet insertion hole of a first rotor core of a rotor according to a fourth modification of the first embodiment, and Fig. 12B is an enlarged plan view showing the configuration around the through hole of a second rotor core of the rotor according to the fourth modification of the first embodiment.

Fig. 13 is an enlarged plan view showing the configuration around the through hole of a second rotor core of a rotor according to a fifth modification of the first embodiment.

Fig. 14 is a plan view showing the configuration of a second rotor core of a rotor according to a sixth modification of the first embodiment.

Fig. 15 is a cross-sectional view showing the configuration of a rotor according to a second embodiment.

Fig. 16 is a cross-sectional view showing the configuration of a rotor according to a third embodiment.

Fig. 17 is a cross-sectional view showing the configuration of a compressor according to a fourth embodiment.

Fig. 18 is a diagram showing the configuration of a refrigeration cycle apparatus according to a fifth embodiment.

Fig. 19 is a diagram showing the configuration of an air conditioner according to a sixth embodiment.

## MODE FOR CARRYING OUT THE INVENTION

A rotor, a motor, a compressor, a refrigeration cycle apparatus and an air conditioner according to each embodiment of the present disclosure will be described below with reference to the drawings. The following embodiments are just examples and it is possible to appropriately combine embodiments and appropriately modify each embodiment.

An xyz orthogonal coordinate system is shown in the drawings to facilitate the understanding of the description. A z-axis is a coordinate axis parallel to an axis line of a rotor. An x-axis is a coordinate axis orthogonal to the z-axis. A y-axis is a coordinate axis orthogonal to both the x-axis and the z-axis.

(First Embodiment)

<Motor>

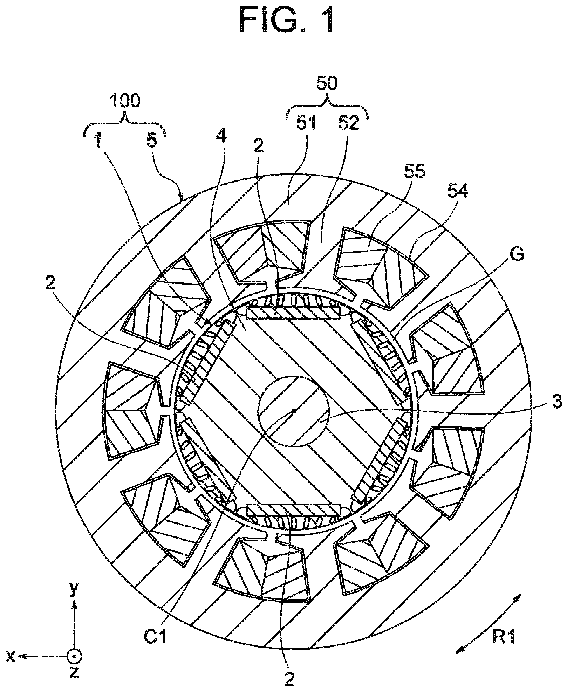

Fig. 1 is a cross-sectional view showing the configuration of a motor 100 according to a first embodiment. As shown in Fig. 1, the motor 100 includes a stator 5 and a rotor 1 having a shaft 3 as a rotary shaft. The rotor 1 is arranged on an inner side of the stator 5. Namely, the motor 100 is a motor of the inner rotor type. An air gap G is formed between the rotor 1 and the stator 5. The air gap G is a gap that is 0.5 mm thick, for example. The shaft 3 extends in the z-axis direction. In the following description, the z-axis direction is referred to also as an "axial direction". Further, a direction along a circumference of a circle centering at an axis line C1 of the shaft 3 (e.g., the arrow R1 shown in Fig. 1) is referred to as a "circumferential direction", and the direction of a straight line orthogonal to the z-axis direction and passing through the axis line C1 is referred to as a "radial direction".

<Stator>

The stator 5 includes a stator core 50 and a coil 55 wound around the stator core 50. The stator core 50 is formed by fixing together a plurality of electromagnetic steel sheets stacked in the z-axis direction by means of crimping or the like. The sheet thickness of the electromagnetic steel sheet is a predetermined value in a range of 0.1 mm to 0.7 mm, for example.

The stator core 50 includes a yoke 51 in a ring-like shape centering at the axis line C1 and a plurality of teeth 52 extending inward in the radial directions from the yoke 51. The plurality of teeth 52 are arranged at even angular intervals in the circumferential direction R1. A tip end part of each tooth 52 on the inner side in the radial direction faces an outer peripheral surface of the rotor 1 via the air gap G. While the number of teeth 52 is 9 in Fig. 1, the number of teeth 52 is not limited to 9 but may be set at any desired number.

The coil 55 for generating a rotating magnetic field is wound around each of the plurality of teeth 52. The coil 55 is formed by, for example, concentrated winding in which magnet wire is directly wound around the teeth 52 via an insulation part 54. The number of times of winding the coil 55 and the wire diameter of the coil 55 are determined based on requested characteristics (revolution speed, torque, etc.), voltage specifications, and a cross-sectional area of a slot. In this example, the yoke 51 is developed into a belt-like shape in order to facilitate the work of winding the coil 55, and the magnet wire having a wire diameter of approximately 1.0 mm is wound around each tooth 52 for 80 turns or so. After the magnet wire is wound around each tooth 52, the ringshaped stator 5 is formed by rounding the yoke 51 in the belt-like shape into a ring-like shape and welding both ends of the yoke 51 to each other.

<Rotor>

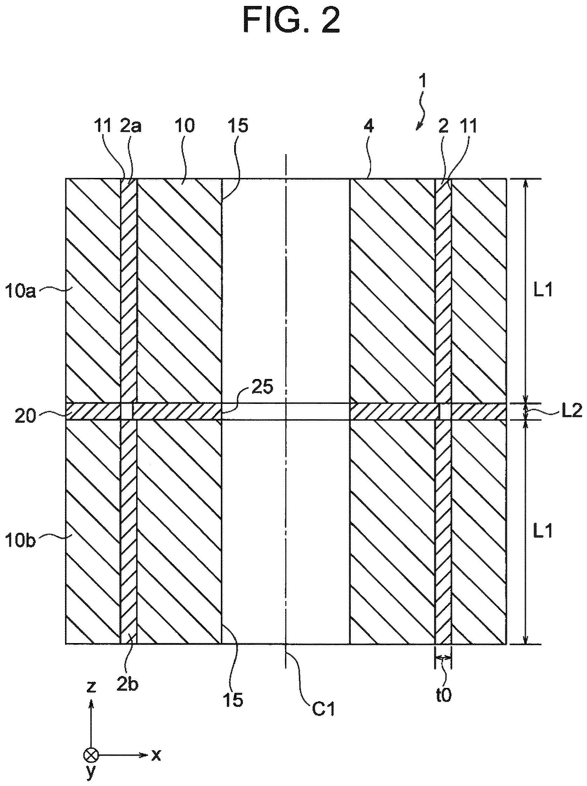

Fig. 2 is a cross-sectional view showing the configuration of the rotor 1 according to the first embodiment. As shown in Figs. 1 and 2, the rotor 1 includes the shaft 3, a first rotor core 10 supported by the shaft 3, and permanent magnets 2 attached to the first rotor core 10. The first rotor core 10 is fitted on the shaft 3 by means of shrink fitting or the like. Incidentally, illustration of the shaft 3 is left out in Fig. 2.

The first rotor core 10 includes a first core part 10a and a second core part 10b arranged in the z-axis direction. Each of the first core part 10a and the second core part 10b is in a cylindrical shape. Each of the first core part 10a and the second core part 10b is formed from a plurality of electromagnetic steel sheets stacked in the z-axis direction, for example. Each of the first core part 10a and the second core part 10b is formed by, for example, fixing together a plurality of electromagnetic steel sheets stacked in the z-axis direction by means of crimping or the like. The sheet thickness of one electromagnetic steel sheet forming the first core part 10a and the second core part 10b is a predetermined value in the range of 0.1 mm to 0.7 mm. In the first embodiment, the sheet thickness of one electromagnetic steel sheet forming the first core part 10a and the second core part 10b is 0.35 mm, for example.

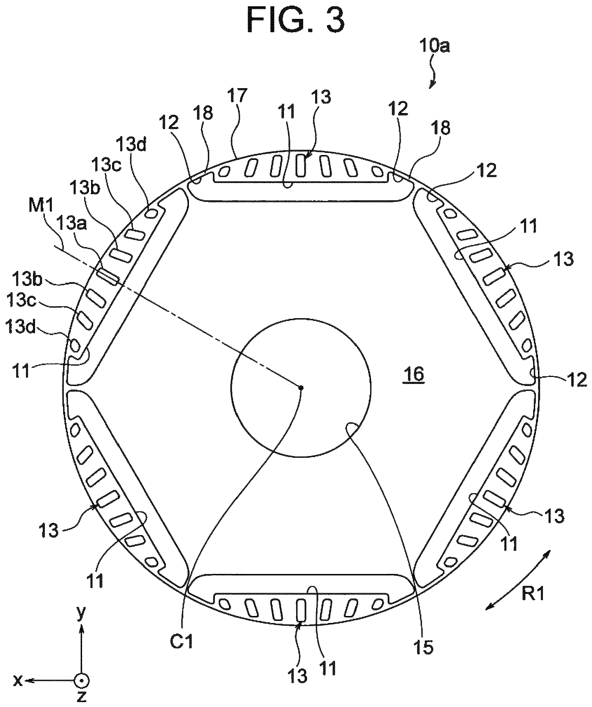

Next, the rest of the configuration of the first core part 10a and the second core part 10b will be described below by using Fig. 3 as well. Fig. 3 is a plan view showing the configuration of the first core part 10a of the first rotor core 10 shown in Fig. 2. Incidentally, in the first embodiment, the configuration of the first core part 10a is the same as the configuration of the second core part 10b. Thus, the following description will be given by taking the first core part 10a as an example.

As shown in Figs. 2 and 3, the first core part 10a includes a first hollow part 15 in which the shaft 3 shown in Fig. 1 is inserted. The first core part 10a includes a plurality of magnet insertion holes 11 arranged with spacings in the circumferential direction R1. The number of magnet insertion holes 11 corresponds to the number of poles of the rotor 1. In the first embodiment, the number of poles of the rotor 1 is 6, and thus the first core part 10a includes 6 magnet insertion holes 11. Incidentally, the number of magnet insertion holes 11 is not limited to 6; it is permissible if the number is an even number greater than or equal to 2. Further, in the following description, a straight line extending in the radial direction through the center of the magnet insertion hole 11 in the circumferential direction R1 is referred to as a "first center line M1".

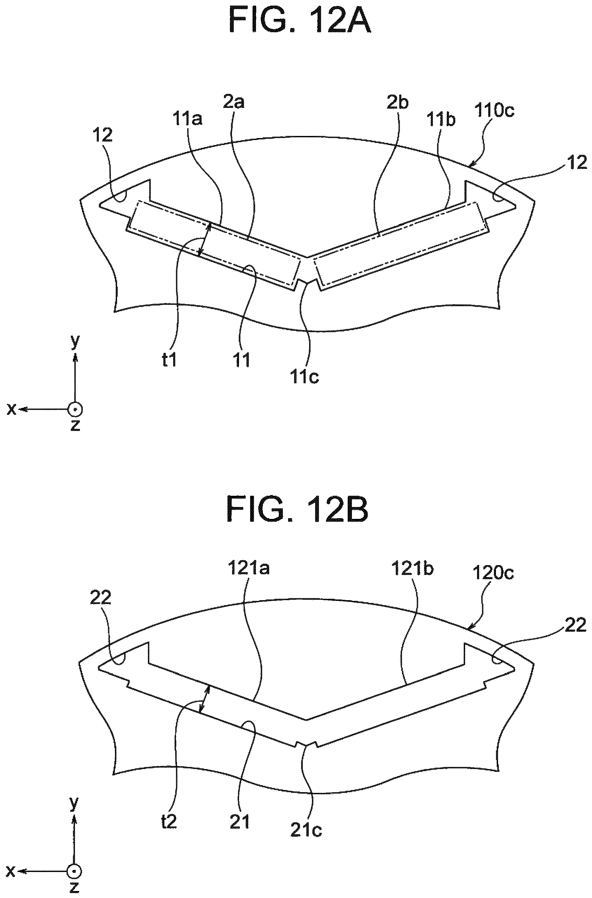

The magnet insertion hole 11 penetrates the first core part 10a in the z-axis direction. The shape of the magnet insertion hole 11 when viewed in the z-axis direction is a linear shape, for example. One permanent magnet 2 is inserted in one magnet insertion hole 11, for example. Incidentally, as shown in Fig. 12 which will be explained later, the shape of the magnet insertion hole 11 when viewed in the z-axis direction can also be a V-shape pointing its convexity inward in the radial direction or a V-shape pointing its convexity outward in the radial direction. It is also permissible even if two or more permanent magnets 2 are inserted in one magnet insertion hole 11.

As shown in Fig. 2, the permanent magnets 2 include a plurality of first magnet parts 2a attached to the first core part 10a and a plurality of second magnet parts 2b attached to the second core part 10b. The first magnet parts 2a and the second magnet parts 2b are inserted in the magnet insertion holes 11. Namely, the rotor 1 has the IPM (Interior Permanent Magnet) structure. Incidentally, the rotor 1 is not limited to the IPM structure but can also have the SPM (Surface Permanent Magnet) structure.

The permanent magnet 2 is a rare-earth magnet, for example. In the first embodiment, the permanent magnet 2 is a neodymium rare-earth magnet containing neodymium (Nd), iron (Fe) and boron B. Magnetic energy of the neodymium rare-earth magnet is higher than magnetic energy of other magnets such as a ferrite magnet. Accordingly, efficiency and output power of the motor 100 can be increased. The permanent magnet 2 contains dysprosium (Dy). Accordingly, coercive force of the permanent magnet 2 is increased. Incidentally, the content percentage of Dy in the permanent magnet (hereinafter referred to also as a "Dy weight ratio") will be described later.

The rotor 1 includes a second rotor core 20 arranged between the first core part 10a and the second core part 10b. The second rotor core 20 is in a cylindrical shape. The second rotor core 20 is fixed to the first core part 10a and the second core part 10b. In the first embodiment, the second rotor core 20 is fixed to the first core part 10a and the second core part 10b by means of crimping. Accordingly, a rotor core body 4 made up of the first rotor core 10 and the second rotor core 20 is formed. Incidentally, the second rotor core 20 may also be fixed to the first core part 10a and the second core part 10b by a method other than the crimping, such as welding.

The second rotor core 20 is formed from a magnetic material such as iron. The second rotor core 20 is formed from electromagnetic steel sheets, for example. In the first embodiment, the second rotor core 20 is formed by fixing together a plurality of electromagnetic steel sheets stacked in the z-axis direction by means of crimping or the like. Incidentally, the second rotor core 20 may also be formed from one electromagnetic steel sheet.

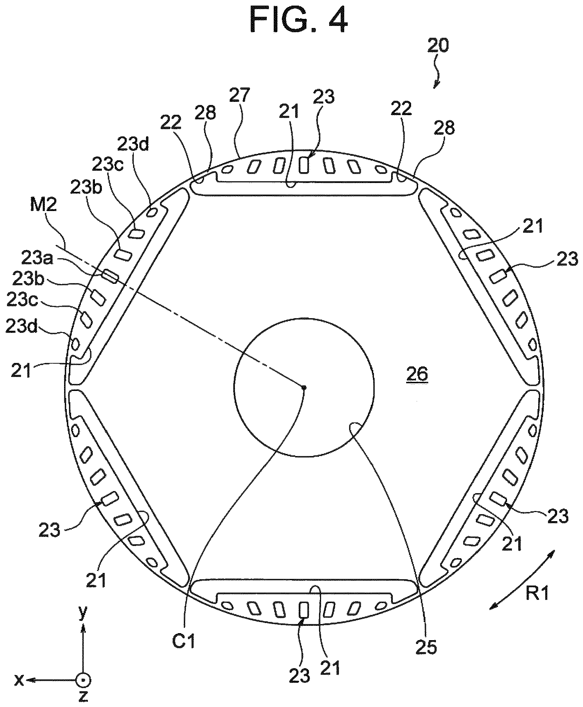

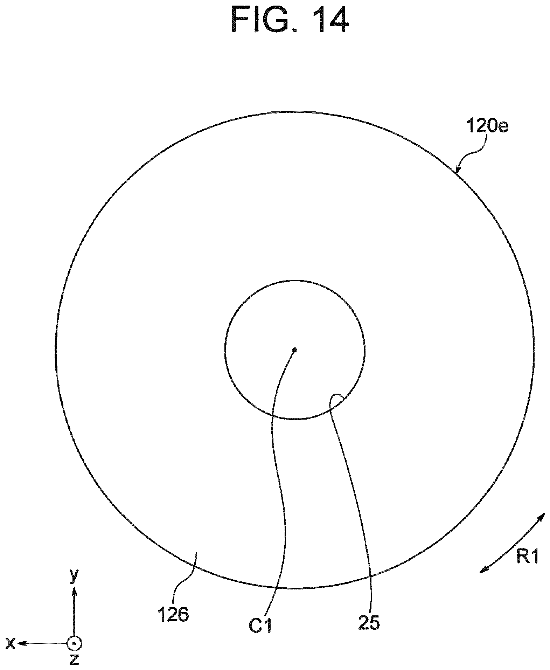

Fig. 4 is a plan view showing the configuration of the second rotor core 20 shown in Fig. 2. As shown in Figs. 2 and 4, the second rotor core 20 includes a second hollow part 25 in which the shaft 3 shown in Fig. 1 is inserted. The second rotor core 20 includes a plurality of through holes 21 penetrating the second rotor core 20 in the z-axis direction. The plurality of through holes 21 are arranged with spacings in the circumferential direction R1. In the first embodiment, the number of through holes 21 is 6, which is the same as the number of magnet insertion holes 11. Incidentally, the number of through holes 21 is not limited to 6 but can also be a different value. Further, the second rotor core 20 may also be configured to include no through holes 21 as shown in Fig. 14 which will be explained later.

The plurality of through holes 21 are formed in regions 29 respectively overlapping with the plurality of permanent magnets 2 (i.e., magnet insertion holes 11) in the z-axis direction. No permanent magnet 2 is inserted in the through hole 21. Namely, no permanent magnet 2 is attached to the second rotor core 20. In the following description, a straight line extending in the radial direction through the center of the through hole 21 in the circumferential direction R1 is referred to as a "second center line M2".

A magnetic reluctance of the second rotor core 20 is lower than a magnetic reluctance of the first rotor core 10. In other words, permeance of the second rotor core 20 per unit length in the z-axis direction is higher than permeance of the first rotor core 10 per unit length in the z-axis direction. Accordingly, magnetic flux of the demagnetizing field due to the rotating magnetic field of the stator 5 (see Fig. 1) is likely to flow into the second rotor core 20 having the lower magnetic reluctance as one of the first rotor core 10 and the second rotor core 20. Thus, the magnetic flux of the demagnetizing field is inhibited from flowing into the permanent magnet 2 attached to the first rotor core 10 and the demagnetization of the permanent magnet 2 can be inhibited.

In the first embodiment, when viewed in the z-axis direction, the area of a part where the second rotor core 20 exists is larger than the area of a part where the first rotor core 10 exists. Specifically, when viewed in the z-axis direction, the area of a metal part 26 of the second rotor core 20 is larger than the area of a metal part 16 of the first rotor core 10. With this configuration, the magnetic reluctance of the second rotor core 20 becomes lower than the magnetic reluctance of the first rotor core 10. Here, the metal part 26 of the second rotor core 20 is a part of the second rotor core 20 excluding the through holes 21, second flux barriers 22, second slits 23 and the second hollow part 25. Further, the metal part 16 of the first rotor core 10 is a part excluding the magnet insertion holes 11, first flux barriers 12, first slits 13 and the first hollow part 15.

In general, metallic material has higher magnetic permeability compared to an air layer. For example, when the second rotor core 20 is formed from electromagnetic steel sheets as in the first embodiment, the magnetic permeability of the electromagnetic steel sheets (e.g., silicon steel sheets) is 4000 to 5000 times the magnetic permeability of the air layer. Since the permeance as the inverse of the magnetic reluctance is proportional to the magnetic permeability, the permeance of the second rotor core 20 can be increased by forming the second rotor core 20 from electromagnetic steel sheets.

In the first embodiment, the external diameter of the second rotor core 20 is the same as the external diameter of the first rotor core 10. With this configuration, productivity increases since the electromagnetic steel sheets are more easily held by a squeeze ring in punch-out processing of the electromagnetic steel sheets in a process of manufacturing the rotor core body 4 compared to cases where the external diameter of the second rotor core 20 is larger than the external diameter of the first rotor core 10. Incidentally, the external diameter of the second rotor core 20 may also be smaller than the external diameter of the first rotor core 10 as shown in Fig. 14 which will be explained later. Namely, it is permissible if the external diameter of the second rotor core 20 is smaller than or equal to the external diameter of the first rotor core 10.

Further, in the first embodiment, the length of the first core part 10a in the z-axis direction is the same length L1 as the length of the second core part 10b in the z-axis direction. The magnetic flux of the demagnetizing field due to the rotating magnetic field of the stator 5 detours around the first core part 10a and the second core part 10b and flows into the second rotor core 20. By setting the length of the first core part 10a in the z-axis direction and the length of the second core part 10b in the z-axis direction to be equal to each other, variation becomes unlikely to occur between the magnetic flux amount of the magnetic flux detouring around the first core part 10a and flowing into the second rotor core 20 and the magnetic flux amount of the magnetic flux detouring around the second core part 10b and flowing into the second rotor core 20. Incidentally, it is permissible even if the length of the first core part 10a in the z-axis direction differs from the length of the second core part 10b in the z-axis direction.

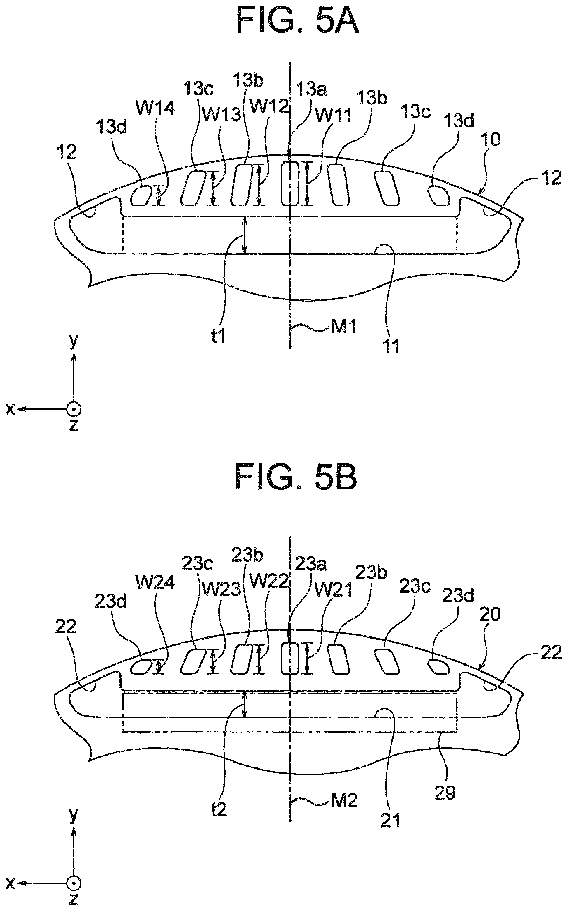

Fig. 5A is an enlarged plan view showing the configuration around the magnet insertion hole 11 of the first core part 10a shown in Fig. 3. Fig. 5B is an enlarged plan view showing the configuration around the through hole 21 of the second rotor core 20 shown in Fig. 4.

As shown in Figs. 5A and 5B, the length t2 of the through hole 21 in the radial direction is less than the length t1 of the magnet insertion hole 11 in the radial direction. Thus, when viewed in the z-axis direction, the area of the through hole 21 is smaller than the area of the magnet insertion hole 11. With this configuration, in the case where the external diameter of the second rotor core 20 and the external diameter of the first rotor core 10 are the same as each other as in the first embodiment, the area of the metal part 26 of the second rotor core 20 can be made larger than the area of the metal part 16 of the first rotor core 10. Accordingly, the permeance of the second rotor core 20 can be made higher than the permeance of the first rotor core 10. Further, the magnetic permeability of the permanent magnet is generally 1 to 1.05 times the magnetic permeability of the air layer and is substantially equal to the magnetic permeability of the air layer. Thus, the permeance rises in the through hole 21 (i.e., air layer) where the traveling distance of the magnetic flux is shorter than in the permanent magnet 2 arranged in the magnet insertion hole 11. Accordingly, it becomes easy to concentrate the flow of the magnetic flux of the demagnetizing field due to the rotating magnetic field of the stator 5 on the second rotor core 20.

As shown in Fig. 5A, the first core part 10a includes a plurality of first flux barriers 12. The plurality of first flux barriers 12 are formed on both sides of the magnet insertion hole 11 in the circumferential direction R1. Since a part 18 between the first flux barrier 12 and an outer periphery 17 of the first core part 10a (hereinafter referred to also as a "thin wall part") is a thin wall, short-circuiting of magnetic flux between magnetic poles adjoining in the circumferential direction R1 can be prevented. The thickness of the thin wall part 18 is, for example, 0.35 mm being equal to the sheet thickness of one electromagnetic steel sheet forming the first core part 10a. With this configuration, the short-circuiting of the magnetic flux can be prevented while securing sufficient strength of the first core part 10a.

The first core part 10a includes first slits 13a, 13b, 13c and 13d formed on the outer side in the radial direction relative to the magnet insertion hole 11. The first slits 13a, 13b, 13c and 13d are long in the radial direction.

The first slit 13a is formed at a position in the circumferential direction R1 to overlap with the first center line M1. The first slit 13b, the first slit 13c and the first slit 13d are formed at positions getting farther in the circumferential direction R1 from the first slit 13a in this order. Further, in the first embodiment, a relationship W11 > W12 > W13 > W14 holds where W11 represents the radial direction length of the first slit 13a, W12 represents the radial direction length of the first slit 13b, W13 represents the radial direction length of the first slit 13c, and W14 represents the radial direction length of the first slit 13d. Incidentally, it is permissible even if the length W11, the length W12, the length W13 and the length W14 are the same as each other. In the following description, when it is unnecessary to distinguish between the first slits 13a, 13b, 13c and 13d, the first slits 13a, 13b, 13c and 13d will be collectively referred to as "first slits 13".

As shown in Fig. 5B, the second rotor core 20 includes a plurality of second flux barriers 22. The plurality of second flux barriers 22 are formed on both sides of the through hole 21 in the circumferential direction R1. Since a part 28 between the second flux barrier 22 and an outer periphery 27 of the second rotor core 20 is a thin wall, short-circuiting of magnetic flux between magnetic poles adjoining in the circumferential direction R1 can be prevented. The second flux barrier 22 connects to the first flux barrier 12 in the z-axis direction.

The second rotor core 20 includes second slits 23a, 23b, 23c and 23d formed on the outer side in the radial direction relative to the through hole 21. The second slit 23a is formed at a position in the circumferential direction R1 to overlap with the second center line M2. The second slit 23b, the second slit 23c and the second slit 23d are formed at positions getting farther in the circumferential direction R1 from the second slit 23a in this order. Further, a relationship W21 > W22 > W23 > W24 is satisfied where W21 represents the radial direction length of the second slit 23a, W22 represents the radial direction length of the second slit 23b, W23 represents the radial direction length of the second slit 23c, and W24 represents the radial direction length of the second slit 23d. Incidentally, it is permissible even if the length W21, the length W22, the length W23 and the length W24 are the same as each other. In the following description, when it is unnecessary to distinguish between the second slits 23a, 23b, 23c and 23d, the second slits 23a, 23b, 23c and 23d will be collectively referred to as "second slits 23".

When viewed in the z-axis direction, the second slits 23 overlap with the first slits 13. The length of the second slit 23 in the radial direction is less than the length of the first slit 13 in the radial direction. With this configuration, in the case where the external diameter of the second rotor core 20 and the external diameter of the first rotor core 10 are the same as each other as in the first embodiment, the area of the metal part 26 in the second rotor core 20 becomes larger than the area of the metal part 16 in the first rotor core 10, and thus the magnetic reluctance of the second rotor core 20 becomes still lower. Accordingly, the magnetic flux of the demagnetizing field due to the rotating magnetic field of the stator 5 becomes still more likely to flow into the second rotor core 20. Thus, the demagnetization of the permanent magnet 2 attached to the first rotor core 10 can be inhibited further.

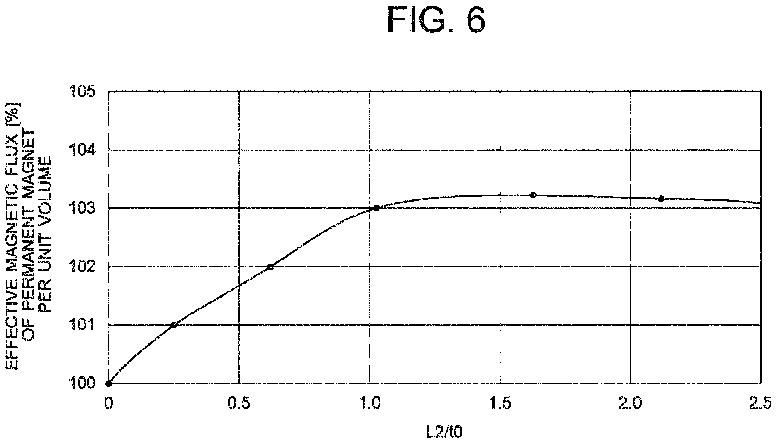

Next, a relationship between the length L2 of the second rotor core 20 in the z-axis direction and the thickness t0 of the permanent magnet 2 in the radial direction will be described below by using Fig. 6. Fig. 6 is a graph showing a relationship between a ratio L2/t0 of the length L2 of the second rotor core 20 to the thickness t0 of the permanent magnet 2 and effective magnetic flux of the permanent magnet 2 per unit volume (hereinafter referred to as "magnet volume"). In Fig. 6, the horizontal axis represents the ratio L2/t0 and the vertical axis represents the effective magnetic flux [%] of the permanent magnet 2 per unit volume.

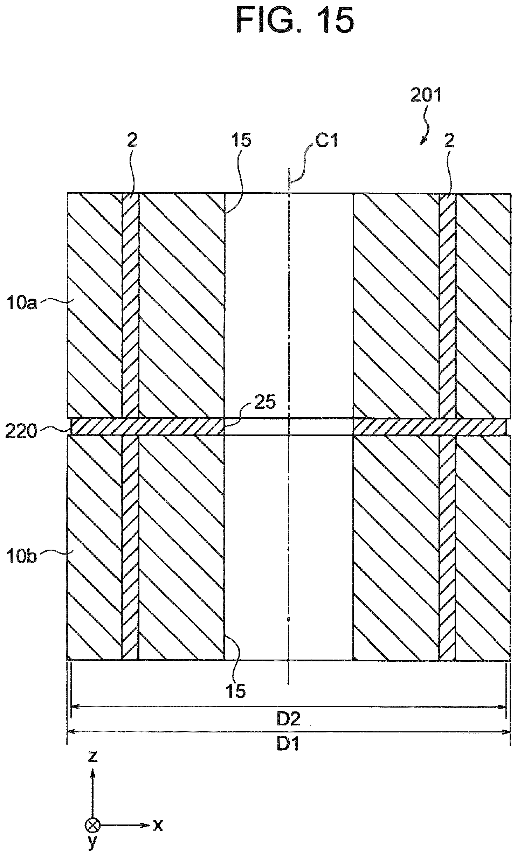

As shown in Fig. 6, in a range where the ratio L2/t0 < 1, the effective magnetic flux per magnet volume increases proportionally to the ratio L2/t0. Put another way, a change amount of the effective magnetic flux per magnet volume is large if the axial direction length L2 of the second rotor core 20 is less than the thickness t0 of the permanent magnet 2. In a range where the ratio L2/t0 ≥ 1, the change in the effective magnetic flux per magnet volume is saturated. Namely, the change amount of the effective magnetic flux per magnet volume is small if the axial direction length L2 of the second rotor core 20 is greater than or equal to the thickness t0 of the permanent magnet 2. Accordingly, if the ratio L2/t0 ≥ 1, the magnetic flux of the permanent magnet 2 can be prevented from flowing into the second rotor core 20 and short-circuiting. Specifically, short-circuiting of magnetic flux between the first magnet part 2a and the second magnet part 2b adjoining in the z-axis direction can be prevented. In the first embodiment, the axial direction length L2 of the second rotor core 20 is equal to the thickness t0 of the permanent magnet 2. Incidentally, the axial direction length L2 of the second rotor core 20 may also be greater than the thickness t0 of the permanent magnet 2 as shown in Fig. 15 which will be explained later. Namely, it is permissible if the axial direction length L2 of the second rotor core 20 is greater than or equal to the thickness t0 of the permanent magnet 2.

<Dy Weight Ratio in Permanent Magnet>

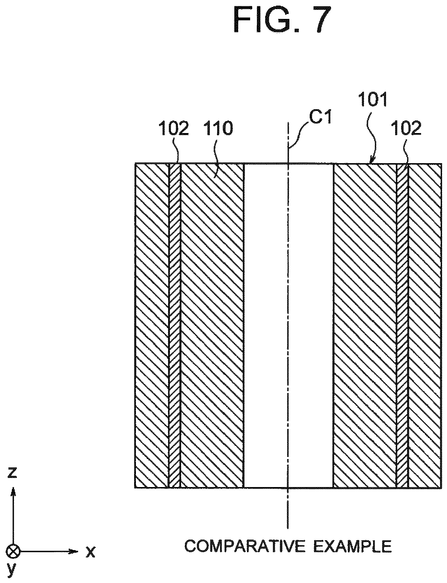

Next, the Dy weight ratio in the permanent magnet 2 of the rotor 1 according to the first embodiment will be described below while making a comparison with a comparative example. Fig. 7 is a cross-sectional view showing the configuration of a rotor 101 of a motor according to the comparative example. As shown in Fig. 7, the rotor 101 in the comparative example includes only a rotor core 110 to which permanent magnets 102 have been attached. Namely, the rotor 101 in the comparative example differs from the rotor 1 of the motor 100 according to the first embodiment in not including a part corresponding to the second rotor core 20 (see Fig. 2) with no permanent magnets 2 attached thereto. Except for this feature, the comparative example is the same as the first embodiment. Thus, Fig. 1 is referred to in the following description.
Here, in a motor including a rotor in the IPM structure, the maximum revolution speed can be raised by use of field-weakening operation. In the field-weakening operation, the magnetic flux of the stator is generated in a direction opposite to the magnetic flux of the permanent magnet, and thus the permanent magnet is demagnetized and the line-to-line voltage of the motor can be lowered. The magnetic flux of the stator generated in the direction opposite to the magnetic flux of the permanent magnet is referred to as "weakening magnetic flux". This makes it possible to secure sufficient tolerance for further raising the revolution speed of the motor.
An operation limit of the field-weakening operation is when the magnetic flux amount of the weakening magnetic flux becomes equal to the magnetic flux amount of the permanent magnet, that is, when the magnetic flux amount of the permanent magnet is canceled out by the weakening magnetic flux. At that time, the demagnetizing field from the stator hits the maximum and thus the demagnetization of the permanent magnet is likely to occur. Thus, the permanent magnet needs to have demagnetization resistance withstanding the maximum demagnetizing field of the stator.
First, the Dy weight ratio $W_{D1}$ in the permanent magnet 102 of the rotor 101 according to the comparative example will be described below. Let $\Phi_m$ represent the magnetic flux amount in the permanent magnet 102, R represent the magnetic reluctance between the stator 5 and the permanent magnet 102, and $L_m$ represent the thickness of the permanent magnet 102 in the radial direction, the maximum demagnetizing field $H_m$ occurring in the permanent magnet 102 is represented by the following expression (1):

$$H_m = \Phi_m \cdot R / L_m \qquad (1).$$

Let $L_a$ represent an air gap length between the rotor 101 and the stator 5, $B_r$ represent residual flux density of the permanent magnet 102, and $\mu_0$ represent the magnetic permeability of the vacuum, the right side of the expression (1) is represented by the following approximation expression (2):

$$\Phi_m \cdot R / L_m \approx B_r / \mu_0 \cdot (L_a / (L_a + L_m)) \qquad (2).$$

This is because influence of the magnetic reluctance of the air gap G and influence of the magnetic reluctance of the permanent magnet 102 are dominant in the magnetic reluctance R between the stator 5 and the permanent magnet 102.
To prevent the occurrence of the demagnetization in the permanent magnet 102, the permanent magnet 102 needs to have demagnetization resistance higher than or equal to the value of the right side of the approximation expression (2). Here, the permanent magnet is generally known to undergo irreversible demagnetization when it is used over a knick point. The knick point is an inflection point where the decrease in the magnitude of magnetization sharply grows in the fourth quadrant of a J-H demagnetization curve. In the case where the permanent magnet is a neodymium rare-earth magnet, the knick point of the neodymium rare-earth magnet is 300000 A/m, for example. Namely, the neodymium rare-earth magnet is demagnetized when the maximum demagnetizing field $H_m$ exceeds 300000 A/m.

Let $iH_k$ represent the knick point, the demagnetization of the permanent magnet 102 does not occur if the knick point $iH_k$ has a value greater than or equal to the value of the right side indicated by the expression (2). Namely, the demagnetization of the permanent magnet 102 does not occur when the knick point $iH_k$ satisfies the following expression (3):

$$iH_K \geq \frac{B_r}{\mu_0} \times \frac{L_a}{L_a + L_m} \qquad (3).$$

However, the value of the knick point $iH_k$ decreases as the temperature of the permanent magnet 102 rises. For example, when the temperature of the neodymium rare-earth magnet is 140 °C, the knick point $iH_k$ decreases to a value in a range of approximately 50000 A/m to 100000 A/m.

On the other hand, the value of the knick point $iH_k$ increases with the increase in the Dy weight ratio $W_{D1}$ in the permanent magnet 102. For example, the value of the knick point $iH_k$ increases by 20% to 30% per 1% increase in the Dy weight ratio, for example.

Here, assuming that maximum temperature of the permanent magnet 102 is 140 °C, the decrease rate of the knick point $iH_k$ per temperature 1 °C of the permanent magnet 102 is 0.6% and the increase rate of the knick point $iH_k$ per Dy weight ratio 1% is 25%, a relationship between the knick point $iH_k$ and the Dy weight ratio $W_{D1}$ is represented by the following expression (4):

$$iH_K = 300000 \times (1 - 0.6 \times 140) \times (1 + 0.25 \times W_{D1}) \qquad (4).$$

By substituting the expression (4) into the expression (3), the following expression (5) is obtained:

$$W_{D1} \geq 0.000048 \times \frac{B_r}{\mu_0} \times \frac{L_a}{L_a + L_m} - 4 \qquad (5).$$

As above, in the rotor 101 according to the comparative example, the Dy weight ratio $W_{D1}$ in the permanent magnet 102 is desired to satisfy the expression (5). However, the calculation of the expression (5) has not taken into account electric current instantaneously flowing into the stator upon the occurrence of an abnormality in the operation of the motor, or local demagnetization in the permanent magnet. Thus, in the motor including the rotor 101 according to the comparative example, there are cases where Dy weight ratio greater than or equal to the value indicated by the right side of the expression (5) is necessary depending on the operation condition or the like.

In contrast, in the motor 100 according to the first embodiment, the demagnetization of the permanent magnet 2 attached to the first rotor core 10 is inhibited by making the magnetic flux of the demagnetizing field from the stator 5 flow into the second rotor core 20 as described earlier. Thus, in the first embodiment, the Dy weight ratio in the permanent magnet 2 can be reduced in the inhibition of the demagnetization of the permanent magnet 2. Specifically, let $W_D$ represent the Dy weight ratio in the permanent magnet 2 of the rotor 1 according to the first embodiment, it is permissible if the Dy weight ratio $W_D$ satisfies the following expression (6):

$$W_D < 0.000048 \times \frac{B_r}{\mu_0} \times \frac{L_a}{L_a + L_m} - 4 \qquad (6).$$

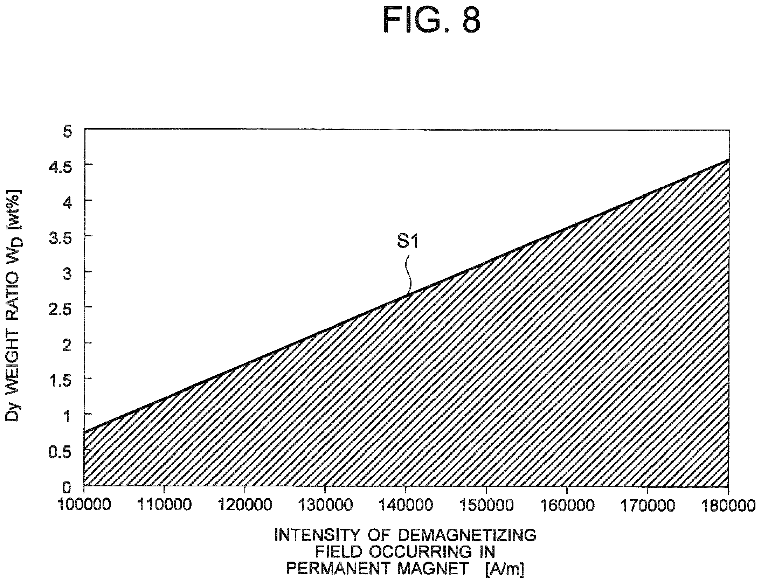

Fig. 8 is a graph showing a relationship between the demagnetizing field occurring in the permanent magnet 2 and the Dy weight ratio $W_D$ in the permanent magnet 2. In Fig. 8, the horizontal axis represents the intensity [A/m] of the demagnetizing field occurring in the permanent magnet 2 and the vertical axis represents the Dy weight ratio $W_D$ [wt%] in the permanent magnet 2. In the graph of Fig. 8, the region indicated by hatching is within a range satisfying the expression (6). Incidentally, the straight line S1 shown in Fig. 8 is a straight line satisfying the following expression (7):

$$W_D = 0.000048 \times \frac{B_r}{\mu_0} \times \frac{L_a}{L_a + L_m} - 4 \qquad (7).$$

<Effect of First Embodiment>

With the rotor 1 according to the first embodiment described above, the following effects are obtained:

With the rotor 1 according to the first embodiment, when viewed in the z-axis direction, the area of the part where the second rotor core 20 exists (i.e., the metal part 26) is larger than the area of the part where the first rotor core 10 exists (i.e., the metal part 16). With this configuration, the permeance of the second rotor core 20 is higher than the permeance of the first rotor core 10. Accordingly, the magnetic flux of the demagnetizing field from the stator 5 flows concentratedly into the second rotor core 20. Thus, the demagnetization of the permanent magnet 2 attached to the first rotor core 10 can be inhibited. Namely, a rotor 1 excelling in demagnetization characteristics can be provided.

With the rotor 1 according to the first embodiment, the demagnetization of the permanent magnet 2 attached to the first rotor core 10 is inhibited by making the magnetic flux of the demagnetizing field from the stator 5 flow into the second rotor core 20. Accordingly, in the first embodiment, the Dy weight ratio in the permanent magnet 2 can be reduced in the inhibition of the demagnetization of the permanent magnet 2. Thus, the demagnetization of the permanent magnet 2 can be inhibited while reducing the content of dysprosium in the permanent magnet 2.

With the rotor 1 according to the first embodiment, the second rotor core 20 includes the through holes 21 penetrating the second rotor core 20 in the z-axis direction. With this configuration, the magnetic flux of the permanent magnet 2 can be inhibited from flowing into the metal part 26 of the second rotor core 20 in comparison with the configuration in which the second rotor core 20 includes no through holes 21. Accordingly, a sufficient magnetic flux amount of the magnetic flux flowing from the permanent magnet 2 to the stator 5 can be secured and the magnetic energy of the permanent magnet 2 can be utilized effectively. Thus, a drop in the efficiency and the output power of the motor 100 can be prevented.

With the rotor 1 according to the first embodiment, when viewed in the z-axis direction, the through hole 21 of the second rotor core 20 is formed in a region overlapping with the permanent magnet 2. With this configuration, the magnetic flux of the permanent magnet 2 can be further inhibited from flowing into the metal part 26 of the second rotor core 20.

With the rotor 1 according to the first embodiment, the external diameter of the second rotor core 20 is the same as the external diameter of the first rotor core 10. With this configuration, the gap between the second rotor core 20 and the stator 5 becomes narrow, and thus the magnetic flux of the demagnetizing field due to the rotating magnetic field of the stator 5 becomes likely to flow into the second rotor core 20. Further, the productivity increases since the squeeze ring is facilitated to hold the electromagnetic steel sheets (e.g., the plurality of electromagnetic steel sheets stacked in the z-axis direction) in the punch-out processing of the electromagnetic steel sheets in the process of manufacturing the rotor core body 4.

With the rotor 1 according to the first embodiment, the length of the first core part 10a in the z-axis direction is the same as the length of the second core part 10b in the z-axis direction. With this configuration, the variation between the magnetic flux amount of the magnetic flux detouring around the first core part 10a and flowing into the second rotor core 20 and the magnetic flux amount of the magnetic flux detouring around the first core part 10a and flowing into the second rotor core 20 can be reduced.

With the rotor 1 according to the first embodiment, the second rotor core 20 is formed from a magnetic material. With this configuration, the magnetic flux of the demagnetizing field from the stator 5 is facilitated to flow into the second rotor core 20.

In the rotor core, there can occur iron loss due to time variation of the magnetic flux. The iron loss is classified into hysteresis loss and eddy-current loss, and the eddy-current loss is proportional to the square of the sheet thickness of one electromagnetic steel sheet. With the rotor 1 according to the first embodiment, the second rotor core 20 is formed from a plurality of electromagnetic steel sheets stacked in the z-axis direction. With this configuration, the iron loss in the second rotor core 20 can be reduced and the efficiency of the motor can be increased.

With the rotor 1 according to the first embodiment, the first rotor core 10 and the second rotor core 20 are formed from electromagnetic steel sheets. Accordingly, in the punch-out processing of the electromagnetic steel sheets, the electromagnetic steel sheets forming the first rotor core 10 and the electromagnetic steel sheets forming the second rotor core 20 can be manufactured just by performing the work of replacing the die. Thus, the productivity can be increased. Further, if the first rotor core 10 and the second rotor core 20 are formed from electromagnetic steel sheets of the same material composition, the productivity increases further.

(First Modification of First Embodiment)

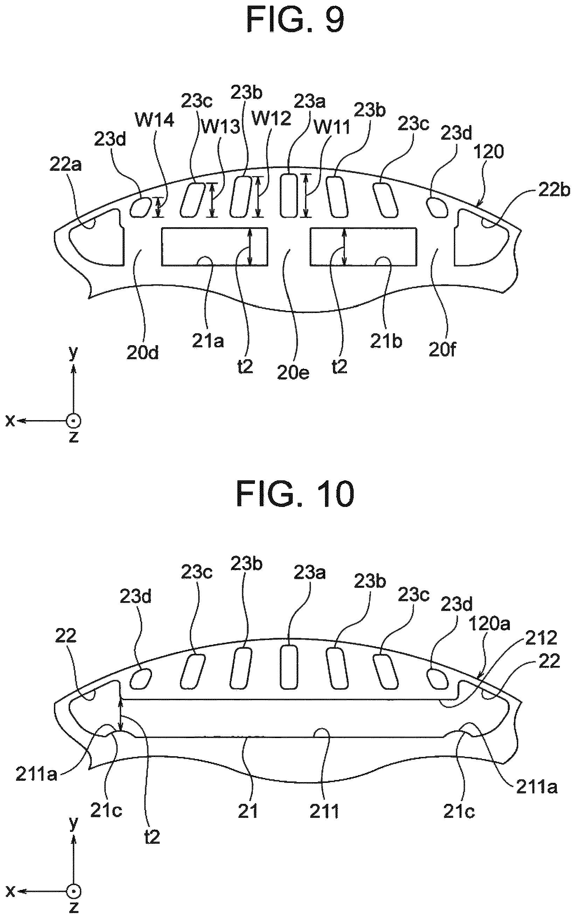

Fig. 9 is an enlarged plan view showing the configuration around through holes 21a and 21b of a second rotor core 120 of a rotor according to a first modification of the first embodiment. In Fig. 9, each component identical or corresponding to a component shown in Fig. 5B is assigned the same reference character as in Fig. 5B. The rotor according to the first modification of the first embodiment differs from the rotor 1 according to the first embodiment in the shapes of the through holes 21a and 21b of the second rotor core 120 and the shapes of the second slits 23a, 23b, 23c and 23d. Except for these features, the first modification of the first embodiment is the same as the first embodiment. Thus, Fig. 1 and Fig. 5A are referred to in the following description.

As shown in Fig. 9, in the first modification of the first embodiment, the second rotor core 120 includes the through holes 21a and 21b formed in a region overlapping with the permanent magnet 2 when viewed in the z-axis direction. A bridge part 20e as a metal part is formed between the through hole 21a and the through hole 21b. The through hole 21a and the through hole 21b have shapes symmetrical with each other across the bridge part 20e. The length t2 of each of the through hole 21a and the through hole 21b in the radial direction is the same as the length t1 of the magnet insertion hole 11 in the radial direction, for example. Incidentally, the length t2 of each of the through hole 21a and the through hole 21b in the radial direction may also be less than the length t1 of the magnet insertion hole 11 in the radial direction.

In the first modification of the first embodiment, the second rotor core 120 includes the bridge part 20e that divides each through hole into two, and thus the sum total of the area of the through hole 21a and the area of the through hole 21b is smaller than the area of the magnet insertion hole 11 when viewed in the z-axis direction. Accordingly, the area of the metal part in the second rotor core 120 can be increased. Thus, the permeance of the second rotor core 120 can be increased. Accordingly, the magnetic flux of the demagnetizing field from the stator 5 can be made to concentratedly flow into the second rotor core 120 and the demagnetization of the permanent magnet 2 can be inhibited.

Further, a bridge part 20d is formed between the through hole 21a and a second flux barrier 22a, and a bridge part 20f is formed between the through hole 21b and a second flux barrier 22b. Namely, in the first modification of the first embodiment, the through hole 21a, 21b and the second flux barrier 22a, 22b are not connected to each other. As above, the second rotor core 120 includes the bridge part 20d, 29f that divides the through hole 21a, 21b and the second flux barrier 22a, 22b from each other, by which the permeance of the second rotor core 120 can be increased further. Accordingly, the magnetic flux of the demagnetizing field from the stator 5 becomes more likely to flow into the second rotor core 120 and the demagnetization becomes still less likely to occur in the permanent magnet 2.

The second rotor core 120 includes the second slits 23a, 23b, 23c and 23d formed on the outer side in the radial direction relative to the through holes 21a and 21b. The radial direction lengths W11, W12, W13 and W14 of the second slits 23 are respectively the same as the radial direction lengths of the first slits 13a, 13b, 13c and 13d shown in Fig. 5A.

Except for the above-described features, the first modification of the first embodiment is the same as the first embodiment.

(Second Modification of First Embodiment)

Fig. 10 is an enlarged plan view showing the configuration around the through hole 21 of a second rotor core 120a of a rotor according to a second modification of the first embodiment. In Fig. 10, each component identical or corresponding to a component shown in Fig. 5B is assigned the same reference character as in Fig. 5B. The rotor according to the second modification of the first embodiment differs from the rotor 1 according to the first embodiment or the first modification of the first embodiment in the shape of the through hole 21. Except for this feature, the second modification of the first embodiment is the same as the first embodiment. Thus, Fig. 1 and Fig. 5A are referred to in the following description.

As shown in Fig. 10, in the second modification of the first embodiment, the through hole 21 of the second rotor core 120a includes a plurality of convex parts 21c formed on both sides of an end part 211 on the inner side in the radial direction in regard to the circumferential direction. Each convex part 21c projects outward in the radial direction from the end part 211 of the through hole 21 on the inner side in the radial direction. With this configuration, a minimum length t2 of the through hole 21 in the radial direction is a length between a part 211a of the end part 211 on the inner side in the radial direction where the convex part 21c is formed and an end part 212 on the outer side in the radial direction. The minimum length t2 of the through hole 21 in the radial direction is less than the length t1 of the magnet insertion hole 11 in the radial direction shown in Fig. 5A. Accordingly, the area of the metal part in the second rotor core 120a can be increased. Thus, the permeance of the second rotor core 120a can be increased. Accordingly, the magnetic flux of the demagnetizing field from the stator 5 can be made to concentratedly flow into the second rotor core 120a and the demagnetization of the permanent magnet 2 can be inhibited.

Except for the above-described features, the second modification of the first embodiment is the same as the first embodiment or the first modification of the first embodiment.

(Third Modification of First Embodiment)

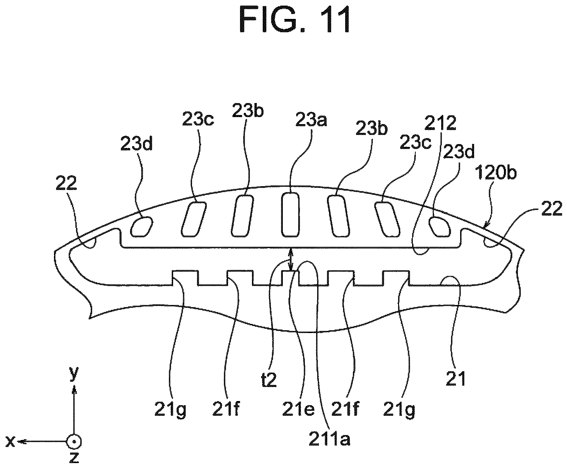

Fig. 11 is an enlarged plan view showing the configuration around the through hole 21 of a second rotor core 120b of a rotor according to a third modification of the first embodiment. In Fig. 11, each component identical or corresponding to a component shown in Fig. 5B is assigned the same reference character as in Fig. 5B. The rotor according to the third modification of the first embodiment differs from the rotor according to the first embodiment or the first modification of the first embodiment in the shape of the through hole 21. Except for this feature, the third modification of the first embodiment is the same as the first embodiment. Thus, Fig. 1 and Fig. 5A are referred to in the following description.

As shown in Fig. 11, in the third modification of the first embodiment, the through hole 21 of the second rotor core 120b includes a plurality of step parts 21e, 21f and 21g formed on the end part 211 on the inner side in the radial direction. The step parts 21e, 21f and 21g project outward in the radial direction from the end part 211 of the through hole 21 on the inner side in the radial direction. The circumferential direction positions of the step parts 21e, 21f and 21g are respectively the same as the circumferential direction positions of the second slits 23a, 23b and 23c. Put another way, the step parts 21e, 21f and 21g adjoin the second slits 23a, 23b and 23c in the radial direction. The step parts 21e, 21f and 21g are formed on the inner side of the second slits 23a, 23b and 23c in the radial direction.

Since the step parts 21e, 21f and 21g are formed in the through hole 21, the minimum length t2 of the through hole 21 in the radial direction is a length between a part 211a of the end part 211 on the inner side in the radial direction where the step part 21e (or the step part 21f or 21g) is formed and the end part 212 on the outer side in the radial direction. With this configuration, when viewed in the z-axis direction, the area of the through hole 21 becomes smaller than the area of the magnet insertion hole 11. Accordingly, the area of the metal part in the second rotor core 120b can be increased. Thus, the permeance of the second rotor core 120b can be increased, the magnetic flux of the demagnetizing field from the stator 5 can be made to concentratedly flow into the second rotor core 120b, and the demagnetization of the permanent magnet 2 can be inhibited.

Here, in the permanent magnet 2, the demagnetization is likely to occur in parts whose circumferential direction positions overlap with the first slits 13a, 13b and 13c (see Fig. 5A). This is because variations occur in the magnetic flux amount when the magnetic flux of the demagnetizing field from the stator 5 flows on both sides of each of the first slits 13a, 13b and 13c in regard to the circumferential direction and then a great amount of magnetic flux of the demagnetizing field locally flows into the permanent magnet 2.

In the third modification of the first embodiment, in the through hole 21, the step parts 21e, 21f and 21g are formed on the inner side of the second slits 23a, 23b and 23c in the radial direction as described above. With this configuration, the minimum length t2 of the through hole 21 in the radial direction hits the minimum at the positions where the step parts 21e, 21f and 21g are formed. Thus, in the metal part in the second rotor core 120b, the area of a part on the inner side in the radial direction relative to the step parts 21e, 21f and 21g can be increased. Accordingly, the magnetic flux of the demagnetizing field from the stator 5 can be inhibited from flowing into the parts of the permanent magnet 2 where the demagnetization is likely to occur (i.e., the parts whose circumferential direction positions overlap with the first slits 13a, 13b and 13c).

Except for the above-described features, the third modification of the first embodiment is the same as the first embodiment or the first modification of the first embodiment.

(Fourth Modification of First Embodiment)

Fig. 12A is an enlarged plan view showing the configuration around the magnet insertion hole 11 of a first rotor core 110c of a rotor according to a fourth modification of the first embodiment. Fig. 12B is an enlarged plan view showing the configuration around the through hole 21 of a second rotor core 120c of the rotor according to the fourth modification of the first embodiment. In Figs. 12A and 12B, each component identical or corresponding to a component shown in Fig. 5A or 5B is assigned the same reference character as in Fig. 5A or 5B. The rotor according to the fourth modification of the first embodiment differs from the rotor 1 according to the first embodiment in the shapes of the magnet insertion hole 11 and the through hole 21. Except for these features, the fourth modification of the first embodiment is the same as the first embodiment. Thus, Fig. 1 and Fig. 5A are referred to in the following description.

As shown in Fig. 12A, the magnet insertion hole 11 of the first rotor core 110c when viewed in the z-axis direction is in a V-shape pointing its convexity inward in the radial direction. The magnet insertion hole 11 includes a first hole part 11a and a second hole part 11b situated on both sides across a circumferential direction central part (i.e., part forming the apex of the V-shape) 11c. The permanent magnet 2 is inserted in each of the first hole part 11a and the second hole part 11b. Namely, in the fourth modification of the first embodiment, two permanent magnets 2 are inserted in one magnet insertion hole 11.

As shown in Fig. 12B, the through hole 21 of the second rotor core 120c when viewed in the z-axis direction is in a V-shape pointing its convexity inward in the radial direction similarly to the magnet insertion hole 11. The through hole 21 includes a first penetration part 121a and a second penetration part 121b situated on both sides across a circumferential direction central part (i.e., part forming the apex of the V-shape) 21c. When viewed in the z-axis direction, the first penetration part 121a overlaps with the first hole part 11a, and the second penetration part 121b overlaps with the second hole part 11b. The first penetration part 121a connects to the first hole part 11a, and the second penetration part 121b connects to the second hole part 11b.

The length t2 of the first penetration part 121a in a direction orthogonal to the axial direction (i.e., in the radial direction) is less than the length t1 of the first hole part 11a in the direction orthogonal to the axial direction, and the width of the second penetration part 121b in the direction orthogonal to the axial direction is less than the width of the second hole part 11b in the direction orthogonal to the axial direction. With this configuration, when viewed in the z-axis direction, the area of the through hole 21 is smaller than the area of the magnet insertion hole 11. Accordingly, the permeance of the second rotor core 120c can be increased. Thus, the magnetic flux of the demagnetizing field from the stator 5 can be made to concentratedly flow into the second rotor core 120c and the demagnetization of the permanent magnet 2 can be inhibited.

Except for the above-described features, the fourth modification of the first embodiment is the same as the first embodiment.

(Fifth Modification of First Embodiment)

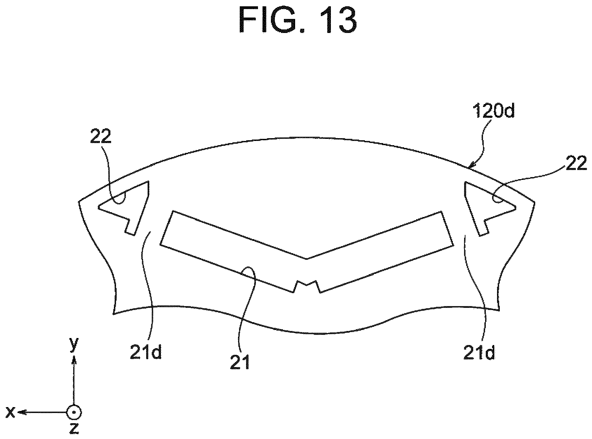

Fig. 13 is an enlarged plan view showing the configuration around the through hole 21 of a second rotor core 120d of a rotor according to a fifth modification of the first embodiment. In Fig. 13, each component identical or corresponding to a component shown in Fig. 12B is assigned the same reference character as in Fig. 12B. The rotor according to the fifth modification of the first embodiment differs from the rotor according to the fourth modification of the first embodiment in the configuration of the second rotor core 120d.

As shown in Fig. 13, in the fifth modification of the first embodiment, the second rotor core 120d includes a bridge part 21d that divides the through hole 21 and the second flux barrier 22 from each other. Namely, the fifth modification of the first embodiment differs from the fourth modification of the first embodiment in that the through hole 21 and the second flux barrier 22 are not connected to each other. Since the second rotor core 120d includes the bridge part 21d, the area of the metal part in the second rotor core 120d increases, by which the permeance of the second rotor core 120d can be increased further. Accordingly, the magnetic flux of the demagnetizing field from the stator 5 becomes more likely to flow into the second rotor core 120c, and thus the demagnetization of the permanent magnet 2 is inhibited further.

Except for the above-described features, the fifth modification of the first embodiment is the same as the fourth modification of the first embodiment.

(Sixth Modification of First Embodiment)

Fig. 14 is a plan view showing the configuration of a second rotor core 120e of a rotor according to a sixth modification of the first embodiment. In Fig. 14, each component identical or corresponding to a component shown in Fig. 4 is assigned the same reference character as in Fig. 4. The rotor according to the sixth modification of the first embodiment differs from the rotor 1 according to the first embodiment in the configuration of the second rotor core 120e. Except for this feature, the sixth modification of the first embodiment is the same as the first embodiment. Thus, Figs. 1 and 3 are referred to in the following description.

As shown in Fig. 14, the second rotor core 120e includes the second hollow part 25 in which the shaft 3 shown in Fig. 1 is inserted. In the second rotor core 120e, the whole of the part excluding the second hollow part 25 is a metal part 126. Namely, in the sixth modification of the first embodiment, parts corresponding to the through holes 21 and the second slits 23a, 23b and 23c shown in Fig. 5B are not formed in the second rotor core 120e. With this configuration, when viewed in the z-axis direction, the area of the part where the second rotor core 120e exists (i.e., the metal part 126) can be made still larger than the area of the part where the first rotor core 10 (see Fig. 3) exists. Thus, the permeance of the second rotor core 120e can be increased further. Accordingly, the magnetic flux of the demagnetizing field from the stator 5 becomes still more likely to flow into the second rotor core 120e and the demagnetization of the permanent magnet 2 becomes still less likely to occur.

(Second Embodiment)

Fig. 15 is a cross-sectional view showing the configuration of a rotor 201 according to a second embodiment. In Fig. 15, each component identical or corresponding to a component shown in Fig. 2 is assigned the same reference character as in Fig. 2. The rotor 201 according to the second embodiment differs from the rotor 1 according to the first embodiment in the shape of a second rotor core 220. Except for this feature, the second embodiment is the same as the first embodiment. Thus, Fig. 1 is referred to in the following description.

As shown in Fig. 15, the rotor 201 includes a second rotor core 220 arranged between the first core part 10a and the second core part 10b. The external diameter D2 of the second rotor core 220 is smaller than the external diameter D1 of the first core part 10a (or the second core part 10b). With this configuration, the electromagnetic steel sheets are easily held by the squeeze ring in the punch-out processing of the electromagnetic steel sheets in the manufacturing process of the rotor 201. Thus, the productivity of the rotor 201 can be increased

In cases where the external diameter D2 of the second rotor core 220 is made smaller than the external diameter D1 of the first core part 10a (or the second core part 10b) as in the second embodiment, the second rotor core 220 does not need to include parts corresponding to the through holes 21 shown in Fig. 5B. Accordingly, even when the external diameter D2 of the second rotor core 220 is made small in order to increase the productivity, the area of the metal part of the second rotor core 220 when viewed in the z-axis direction can be made larger than the area of the metal part of the first rotor core 10 and the permeance of the second rotor core 220 can be increased. Thus, the occurrence of the demagnetization of the permanent magnet 2 can be inhibited while increasing the productivity of the rotor 201.

Except for the above-described features, the second embodiment is the same as the first embodiment.

(Third Embodiment)

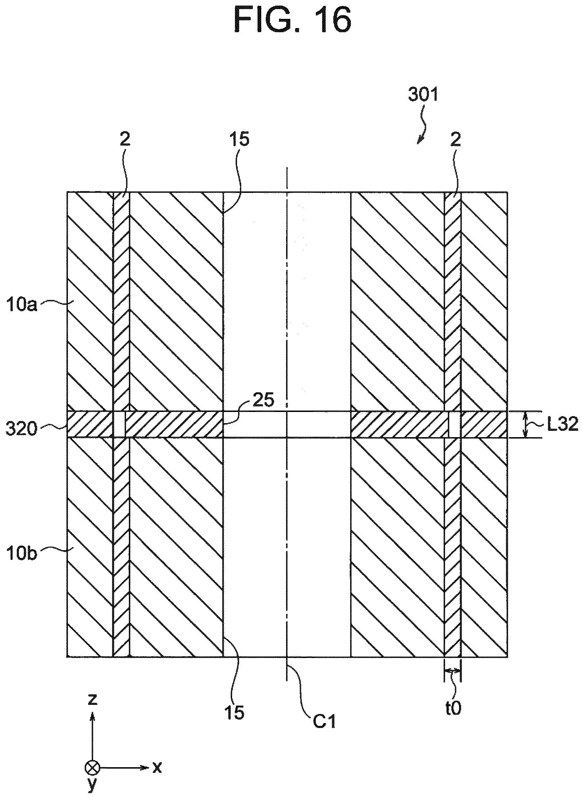

Fig. 16 is a cross-sectional view showing the configuration of a rotor 301 according to a third embodiment. In Fig. 16, each component identical or corresponding to a component shown in Fig. 2 is assigned the same reference character as in Fig. 2. The rotor 301 according to the third embodiment differs from the rotor 1 according to the first embodiment in the shape of a second rotor core 320.

As shown in Fig. 16, the rotor 301 includes a second rotor core 320 arranged between the first core part 10a and the second core part 10b. The axial direction length L32 of the second rotor core 320 is greater than the thickness t0 of the permanent magnet 2 in the radial direction. With this configuration, in the third embodiment, the spacing between the first magnet part 2a and the second magnet part 2b in the z-axis direction increases compared to the first embodiment, and thus the short-circuiting of the magnetic flux between the first magnet part 2a and the second magnet part 2b adjoining in the z-axis direction becomes still less likely to

occur.

Except for the above-described features, the third embodiment is the same as the first embodiment.

(Fourth Embodiment)

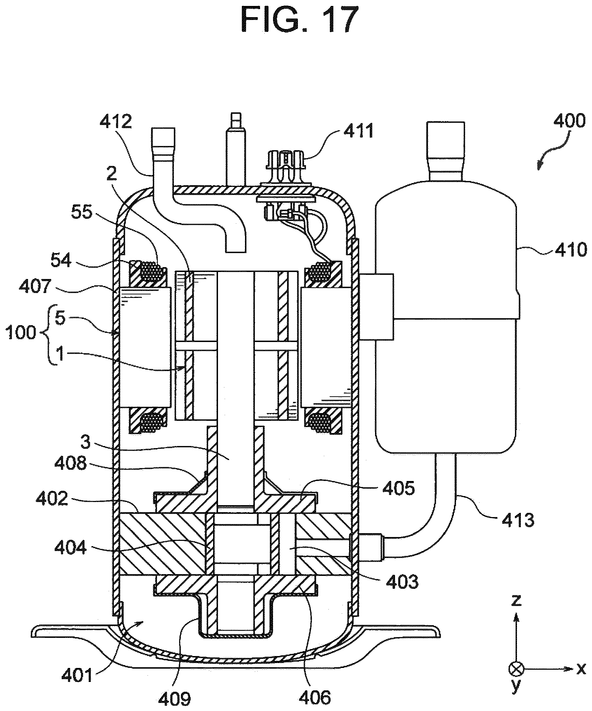

Next, a compressor 400 according to a fourth embodiment including the motor 100 shown in Fig. 1 will be described below. That shown in Fig. 17 is a cross-sectional view showing the configuration of the compressor 400. The compressor 400 is a rotary compressor, for example. Incidentally, the compressor 400 is not limited to a rotary compressor but can also be a compressor of a different type such as a scroll compressor.

As shown in Fig. 17, the compressor 400 includes a compression mechanism unit 401, the motor 100, a hermetic container 407 and an accumulator 410.

The compression mechanism unit 401 includes a cylinder 402, a rotary piston 404, an upper frame 405 and a lower frame 406. The motor 100 drives the compression mechanism unit 401. The compression mechanism unit 401 and the motor 100 are connected to each other by the shaft 3.

A cylinder chamber 403 is provided inside the cylinder 402. The rotary piston 404 is fitted on an eccentric shaft part of the shaft 3 and rotates in the cylinder chamber 403. By the rotation of the rotary piston 404, a refrigerant is compressed. The upper frame 405 is fixed to an end face of the cylinder chamber 403 on the +z-axis side. The lower frame 406 is fixed to an end face of the cylinder chamber 403 on the -z-axis side. An upper discharge muffler 408 is attached to the upper frame 405, and a lower discharge muffler 409 is attached to the lower frame 406.

The hermetic container 407 is in a cylindrical shape. Refrigeration machine oil (not shown) lubricating each sliding part of the compression mechanism unit 401 is stored in a bottom part of the hermetic container 407.

The stator 5 of the motor 100 is fixed inside the hermetic container 407 by means of shrink fitting, press fitting, welding or the like. Electric power is supplied to the coil 55 of the stator 5 from a terminal 411 fixed to the hermetic container 407. The top of the hermetic container 407 is provided with a discharge pipe 412 for discharging the compressed refrigerant to the outside.

The accumulator 410 stores refrigerant gas that is not shown. The accumulator 410 is fixed to the cylinder 402 via an intake pipe 413. With this configuration, the refrigerant gas stored in the accumulator 410 is supplied to the cylinder 402 via the intake pipe 413.

Drive current is supplied from the terminal 411 to the motor 100, and accordingly, the shaft 3 of the rotor 1 of the motor 100 rotates. Due to the rotation of the shaft 3, the rotary piston 404 also rotates. Then, the rotary piston 404 fitted on the shaft 3 rotates in the cylinder chamber 403 and the refrigerant is compressed in the cylinder chamber 403. The refrigerant compressed in the cylinder chamber 403 flows through the upper discharge muffler 408 and the lower discharge muffler 409 and then ascends in the hermetic container 407 through wind holes (not shown) of the rotor 1.

The refrigerant that ascended in the hermetic container 407 is discharged through the discharge pipe 412 and supplied to a high-pressure side of a refrigeration cycle apparatus 500.

In the motor 100 according to the first embodiment described earlier, the efficiency is increased by the inhibition of the demagnetization of the permanent magnet 2. Accordingly, operating efficiency of the compressor 400 can be increased by employing the motor 100 for the compressor 400.

(Fifth Embodiment)

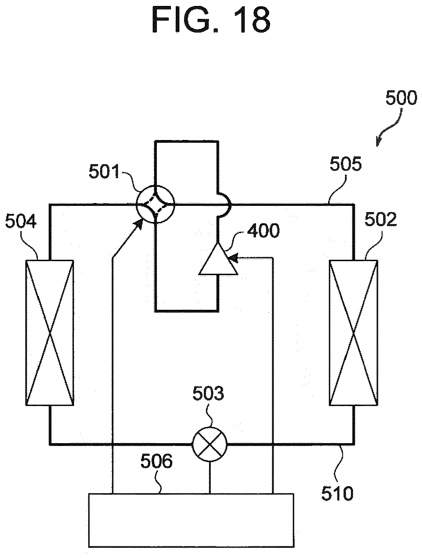

Next, a refrigeration cycle apparatus 500 according to a fifth embodiment including the compressor 400 shown in Fig. 17 will be described below. Fig. 18 is a diagram showing the configuration of the refrigeration cycle apparatus 500 according to the fifth embodiment.

As shown in Fig. 18, the refrigeration cycle apparatus 500 includes the compressor 400, a four-way valve 501, a condenser 502, an expansion valve 503 as a decompression device, an evaporator 504, refrigerant piping 505, and a control unit 506. A refrigerant circuit 510 is formed by connecting the compressor 400, the condenser 502, the expansion valve 503 and the evaporator 504 by using the refrigerant piping 505.

Next, the operation of the refrigeration cycle apparatus 500 will be described below. The compressor 400 compresses the refrigerant taken in and sends out the compressed refrigerant as a high-temperature and high-pressure gas refrigerant. The four-way valve 501 is a valve that switches a flow direction of the refrigerant. In Fig. 18, the refrigerant sent out from the compressor 400 is fed to the condenser 502. The condenser 502 executes heat exchange between the high-temperature and high-pressure gas refrigerant sent out from the compressor 400 and a medium (e.g., air) and sends out the refrigerant as a liquid refrigerant obtained by condensing the gas refrigerant. The expansion valve 503 expands the liquid refrigerant sent out from the condenser 502 and sends out the expanded liquid refrigerant as a low-temperature and low-pressure liquid refrigerant.

The evaporator 504 executes heat exchange with the low-temperature and low-pressure medium (e.g., air) sent out from the expansion valve 503, thereby expands the liquid refrigerant, and sends out the refrigerant as a refrigerant gas. The refrigerant gas sent out from the evaporator 504 returns to the compressor 400 and is compressed again. Incidentally, the operation of the four-way valve 501 and the compressor 400 is controlled by the control unit 506.

The operating efficiency of the compressor 400 according to the fourth embodiment described earlier has been increased. Accordingly, energy efficiency of the refrigeration cycle apparatus 500 can be increased by employing the compressor 400 for the refrigeration cycle apparatus 500.

(Sixth Embodiment)

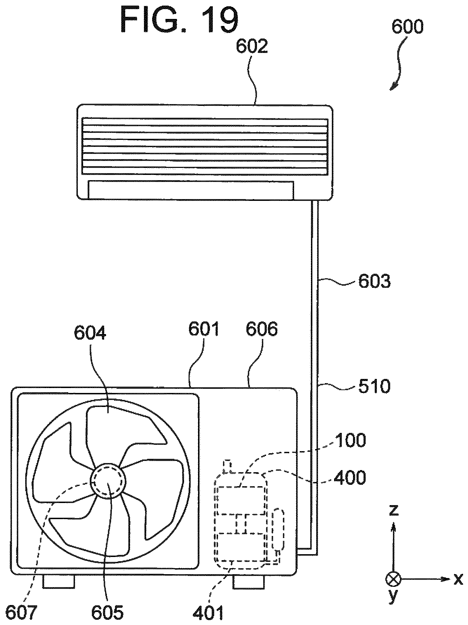

Next, an air conditioner according to a sixth embodiment will be described below. Fig. 19 is a diagram showing the configuration of the air conditioner 600 according to the sixth embodiment. As shown in Fig. 19, the air conditioner 600 includes an outdoor unit 601, an indoor unit 602 and refrigerant piping 603. A refrigerant circuit 510 is formed by connecting the outdoor unit 601 and the indoor unit 602 by using the refrigerant piping 603. The air conditioner 600 is capable of executing an operation such as a cooling operation of blowing out cool air from the indoor unit 602 or a heating operation of blowing out warm air, for example.

The outdoor unit 601 includes an outdoor blower 605, the compressor 400, and a housing 606 that accommodates the outdoor blower 605 and the compressor 400. The outdoor blower 605 includes a blade wheel 604 and a motor 607 that drives the blade wheel 604. The blade wheel 604 is a propeller fan, for example. When the motor 607 drives the blade wheel 604, the blade wheel 604 rotates and an airflow is generated. By this operation, the outdoor blower 605 is capable of blowing out air. For example, in the cooling operation of the air conditioner 600, heat emitted when the refrigerant compressed by the compressor 400 is condensed in a condenser (not shown) is discharged to the outside of the room by the air blowing operation of the outdoor blower 605.

The outdoor unit 601 further includes a four-way valve (e.g., the four-way valve 501 shown in Fig. 18) that switches the flow direction of the refrigerant. The four-way valve of the outdoor unit 601 feeds the high-temperature and high-pressure refrigerant gas sent out from the compressor 400 to a heat exchanger of the outdoor unit 601 at the time of the cooling operation, or to a heat exchanger of the indoor unit 602 at the time of the heating operation. The air conditioner 600 can be equipped with the refrigeration cycle apparatus 500 shown in Fig. 18 since the outdoor unit 601 includes the four-way valve as described above.

Incidentally, the refrigeration cycle apparatus 500 according to the fifth embodiment may be provided in not only the air conditioner 600 but also a different household electric appliance such as a refrigerator or a freezer.

**DESCRIPTION OF REFERENCE CHARACTERS**

1: rotor, 2: permanent magnet, 3: shaft, 5: stator, 10: first rotor core, 10a: first core part, 10b: second core part, 11: magnet insertion hole, 13a, 13b, 13c, 13d: first slit, 20, 120, 120a, 120b, 120c, 120d, 120e, 220, 320: second rotor core, 21: through hole, 23a, 23b, 23c, 23d: second slit, 100: motor, 400: compressor, 401: compression mechanism unit, 500: refrigeration cycle apparatus, 502: condenser, 503: expansion valve, 504: heat exchanger, 600: air conditioner.

**Claims**

1. A rotor comprising:

   a rotary shaft extending in an axial direction;
   a first rotor core that includes a first core part and a second core part arranged in the axial direction and is supported by the rotary shaft;
   a permanent magnet attached to the first rotor core; and
   a second rotor core arranged between the first core part and the second core part,
   wherein an area of a part where the second rotor core exists is larger than an area of a part where the first rotor core exists when viewed in the axial direction.

2. The rotor according to claim 1, wherein a magnetic reluctance of the second rotor core is lower than a magnetic reluctance of the first rotor core.

3. The rotor according to claim 1 or 2, wherein an external diameter of the second rotor core is smaller than or equal to an external diameter of the first rotor core when viewed in the axial direction.

4. The rotor according to any one of claims 1 to 3, wherein a length of the first core part in the axial direction and a length of the second core part in the axial direction are equal to each other.

5. The rotor according to any one of claims 1 to 4, wherein

   the first rotor core includes a magnet insertion hole in which the permanent magnet is inserted,
   the second rotor core includes a through hole that is formed at a position to overlap with the magnet insertion hole in the axial direction and penetrates the second rotor core in the axial direction,
   the area of the part where the second rotor core exists is an area of a part excluding the through hole, and
   the area of the part where the first rotor core exists is an area of a part excluding the magnet insertion hole.

6. The rotor according to claim 5, wherein an area of the through hole is smaller than an area of the magnet insertion hole when viewed in the axial direction.

7. The rotor according to claim 5 or 6, wherein a length of the through hole in a radial direction orthogonal to the axial direction is less than a length of the magnet insertion hole in the radial direction.

8. The rotor according to any one of claims 5 to 7, wherein

   the first rotor core includes a first slit arranged on an outer side in a radial direction of the rotor relative to the magnet insertion hole,
   the second rotor core includes a second slit arranged on the outer side in the radial direction relative to the through hole,
   the area of the part where the second rotor core exists is an area of the part excluding the second slit, and
   the area of the part where the first rotor core exists is an area of the part excluding the first slit.

9. The rotor according to claim 8, wherein an area of the second slit is smaller than an area of the first slit when viewed in the axial direction.

10. The rotor according to claim 8 or 9, wherein a length of the through hole in a direction orthogonal to the axial direction is smallest in a part overlapping with the second slit in a circumferential direction of the rotor.

11. The rotor according to any one of claims 1 to 10, wherein a length of the second rotor core in the axial direction is greater than or equal to a thickness of the permanent magnet in a direction orthogonal to the axial direction.

**12.** The rotor according to any one of claims 1 to 11, wherein the second rotor core is formed from a magnetic material.

**13.** The rotor according to any one of claims 1 to 12, wherein the second rotor core is formed from one or more electromagnetic steel sheets.

**14.** The rotor according to any one of claims 1 to 13, wherein the first rotor core and the second rotor core are formed from the same material.

**15.** The rotor according to any one of claims 1 to 14, wherein the permanent magnet is a neodymium rare-earth magnet.

**16.** A motor comprising:

the rotor according to any one of claims 1 to 15; and
a stator.

**17.** The motor according to claim 16, wherein

the permanent magnet contains dysprosium, and
let $W_D$ represent a weight ratio of the dysprosium in the permanent magnet, $B_r$ represent residual flux density of the permanent magnet, $\mu_0$ represent magnetic permeability of a vacuum, $L_a$ represent spacing between the stator and the rotor, and $L_m$ represent a thickness of the permanent magnet in a direction orthogonal to the axial direction, the motor satisfies a following relationship:

$$W_D < 0.000048 \times \frac{B_r}{\mu_0} \times \frac{L_a}{L_a + L_m} - 4.$$

**18.** A compressor comprising:

the motor according to claim 16 or 17; and
a compression mechanism unit driven by the motor.

**19.** A refrigeration cycle apparatus comprising:

the compressor according to claim 18;
a condenser that condenses a refrigerant sent out from the compressor;
a decompression device that decompresses the refrigerant condensed by the condenser; and
an evaporator that evaporates the refrigerant decompressed by the decompression device.

**20.** An air conditioner comprising the refrigeration cycle apparatus according to claim 19.

# FIG. 1

# FIG. 2

# FIG. 3

# FIG. 4

# FIG. 5A

# FIG. 5B

# FIG. 6

# FIG. 7

COMPARATIVE EXAMPLE

# FIG. 8

# FIG. 9

# FIG. 10

# FIG. 11

# FIG. 12A

# FIG. 12B

# FIG. 13

# FIG. 14

# FIG. 15

# FIG. 16

# FIG. 17

EP 4 131 729 A1

# FIG. 18

33

# FIG. 19

**EP 4 131 729 A1**

## INTERNATIONAL SEARCH REPORT

| International application No. |
| --- |
| PCT/JP2020/014046 |

**A.  CLASSIFICATION OF SUBJECT MATTER**
H02K 1/27(2006.01)i
FI: H02K1/27 501M; H02K1/27 501K
According to International Patent Classification (IPC) or to both national classification and IPC

**B.  FIELDS SEARCHED**

Minimum documentation searched (classification system followed by classification symbols)
H02K1/27

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | WO 2017/009969 A1 (MITSUBISHI ELECTRIC CORP.) 19 | 1-5, 8-20 |
| Y | January 2017 (2017-01-19) paragraphs [0011]-[0031], fig. 1-7, 10-11 | 19-20 |
| X | JP 2010-206882 A (MITSUBISHI ELECTRIC CORP.) 16 | 1-7, 11-16, 18 |
| Y | September 2010 (2010-09-16) paragraphs [0038], [0074]-[0085], fig. 24-30 | 19-20 |
| X | JP 2002-112480 A (FUJITSU GENERAL LTD.) 12 April | 1-5, 11-16, 18 |
| Y | 2002 (2002-04-12) paragraphs [0013]-[0020], fig. 1-3 | 19-20 |

☐ Further documents are listed in the continuation of Box C.  ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 11 June 2020 (11.06.2020) | 23 June 2020 (23.06.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application no.

PCT/JP2020/014046

| Patent Documents referred in the Report | Publication Date | Patent Family | Publication Date |
|---|---|---|---|
| WO 2017/009969 A1 | 19 Jan. 2017 | US 2018/0083502 A1 paragraphs [0022]-[0042], fig. 1-7, 10-11<br>EP 3324515 A1<br>CN 107534334 A | |
| JP 2010-206882 A | 16 Sep. 2010 | (Family: none) | |
| JP 2002-112480 A | 12 Apr. 2002 | (Family: none) | |

Form PCT/ISA/210 (patent family annex) (January 2015)

**REFERENCES CITED IN THE DESCRIPTION**

**Patent documents cited in the description**

- JP 5931213 B